# EUROPEAN PATENT SPECIFICATION

(11) **EP 2 064 906 B1**
(45) Date of publication and mention of the grant of the patent: **25.03.2015**
(21) Application number: 07803219.0
(22) Date of filing: 04.09.2007
(51) Int. Cl.: H04W 24/04

(54) **METHOD FOR RECOVERING CONNECTIVITY IN THE EVENT OF A FAILURE IN A RADIO COMMUNICATIONS SYSTEM AND CONTROLLING NODE THEREOF**
VERFAHREN ZUR WIEDERHERSTELLUNG EINER VERBINDUNG IM FALLE EINES FEHLERS IN EINEM FUNKKOMMUNIKATIONSSYSTEM UND STEUERUNGSKNOTEN DAFÜR
PROCÉDÉ POUR LA RÉCUPÉRATION D'UNE CONNECTIVITÉ EN CAS D'ERREUR DANS UN SYSTÈME DE COMMUNICATIONS RADIO ET NOEUD DE COMMANDE POUR LEDIT PROCÉDÉ

(30) Priority: 06.09.2006 EP 06018654
(43) Date of publication of application: 03.06.2009
(73) Proprietor: Nokia Solutions and Networks GmbH & Co. KG, 81541 Munich (DE)
(72) Inventor: HUBER, Alois, A-1030 Wien (AT); ULRICH, Thomas, 67098 Bad Dürkheim (DE); VESELY, Alexander, A-8330 Raabau (AT); WALDHAUSER, Richard, 81249 München (DE)
(74) Representative: Weidel, Gottfried
(86) International application number: PCT/EP2007/059255
(87) International publication number: WO 2008/028916

(56) References cited:
- EP-A- 1 198 147
- EP-A- 1 615 458
- WO-A-2004/047380
- US-B1- 6 907 237
- VENKEN K ET AL: "Enabling network redundancy in the radio access network" INTERNATIONAL CONFERENCE ON 3G MOBILE COMMUNICATION TECHNOLOGIES, 8 May 2002 (2002-05-08), pages 27-31, XP002284047

## Description

### Field of the invention

The invention relates to the field of preserving the connectivity between nodes in radio communications systems, in particular when a failure of a node is detected.

### Summary of the invention

In present day radio communications systems, such as UTRAN (Universal Mobile Telecommunications System Terrestrial Radio Access Network), when UEs (User Equipments), such as mobile stations, require radio resources in order to set up a service, the UEs transmit a request for allocation of radio resources to a RRM (Radio Resource Manager). Within UTRAN, a RNC (Radio Network Controller) acts as the RRM, for the geographical area it controls. Each RNC controls a group of nodes, the nodes being a BS (Base Station) and/or a NodeB, each node in turn controlling an area known as a cell. BSs and/or NodeBs allow UEs located within their respective cells to access a core network such as a PSTN (Public Switched Telephone Network) and/or the internet.

However, this type of system architecture has the drawback that in the event of a failure of the RNC, which can be a permanent one in the case of a hardware failure or a temporary one in the case of a short power outage, all the nodes comprising the group which is under the RNC's control will loose connectivity to the PSTN and/or the internet. Consequently, UEs will in turn loose connectivity and all running services are terminated.

EP 1615458 A1 discloses a mobile communication system comprising a mobile terminal unit, a radio base station which communicates with said mobile terminal unit via a radio channel, and a radio controller which controls said radio base station. The radio controller is physically separated into first control means for controlling transfer of signaling and second control means for accommodating said radio base station under the control and controlling transfer of user data. The system further comprises a radio base station replacement control apparatus which controls replacement of said radio base station.

The fact that the RNC is a single point of failure reduces the efficiency of the radio communications system. Data throughput is drastically reduced, the time necessary for completing a data transmission to and from a UE is greatly increased due to the fact that a UE has to re-start the necessary procedures for re-connecting to the radio communications system, QoS (quality of service) requirements for data transmissions can not be maintained, requested services can not be provided or are dropped, radio resources lost, etc.

In order to overcome the above drawback and the negative effects affecting data transmissions, the following solutions have been proposed:

Providing for hardware back-ups for the each RNC, by increasing the redundancy of the different hardware elements comprising an RNC, e.g. processing boards etc and/or permitting for such hardware to be hot-swappable. However, this solution incurs high manufacturing costs for each RNC as well as increasing investment costs when building a radio communications system with such RNCs. Furthermore, in the event of failures, time is still lost in ensuring that the redundant hardware elements replace the failed ones within the shortest time possible, as well as causing connectivity problems with nodes and UEs. Additionally, in the event of a failure, connectivity and services are lost for all cells controlled by the RNC.

Co-locating the RRM at each node, BS or nodeB, so that the RRM only services requests from within the cell of the node. In case of a failure, only the cell and the UEs located within the cell are affected instead of all cells as mentioned hereinabove. However, this solution requires a large number of RRM entities, as each and every cell effectively requires to have at least one such RRM, integrated or coupled to the nodes. Furthermore, all RRMs need to be co-ordinated with each other due to the fact that radio resources are limited and have to be shared between the different UEs, leading to a large amount of signalling being generated.

In the event that a UE having requested and obtained services in a cell moves to another cell, a handover procedure needs to be executed between the nodes. This handover procedure also comprises of the negotiation procedures executed between the source node and the target node in order to verify that the same services can be maintained in the new cell. Further signalling will also be generated between the nodes as measurements such as interference measurements need to be forwarded between the nodes and from the co-located RRMs, so that all nodes have accurate information when performing the handover procedures.

Additionally, nodes will also have to communicate with HLRs/VLRs (Home Location Registers / Visitor Location Registers) in certain cases, further increasing the amount of signalling. In the case that a requested service is granted based on a valid subscription, HLR/VLR data would have to be retrieved by the node. In the case of a node failing a HLR/VLR might have to be accessed in order to restore all the lost data. This can be performed by re-initialising the security contexts or by NAS (Network Access Server) signalling to name but a few. In the case that a source node requires information for a target node, for an UE in idle mode, the HLR/VLR has to be checked and if the stored information is not up-to-date more update signalling is required.

The large amount of generated signalling reduces the efficiency of the radio communications system due to the fact that the time required for processing increases a lot and thus causing an increase in the time required for the system to be stable. Additionally, a lot of processing power is required in order to accommodate the increased amount of signalling further increasing manufacturing and/or infrastructure costs.

Alternatively, a plurality of redundant RRMs serving a group of nodes can be provided. The drawback of this solution is that due to the fact that a number of redundant RRMs exist, each node requires to have a RRM client function in order to be able to access each RRM in case of loosing connectivity with a serving RRM, as well as having to request a reservation of resources from the RRM during a call set-up procedure, in order to avoid the case wherein two or more RRMs trying to set-up a connection to the same node at the same time. This increases the complexity of the signalling as well as the time required to ensure that the call set-up is successful. Furthermore, RRMs that serve the same nodes have to dynamically exchange status information between them in order to ensure that each RRM has the latest up-to-date status information. Additionally, measurements such as interference measurements need to be forwarded from the nodes to the RRMs. This causes a continuous signalling to take place reducing data throughput within the radio communications system.

A need therefore exists for a technique that counters the above mentioned drawbacks and provides for the reduction of signalling required when re-connecting after a loss of connectivity and reducing the time that connectivity is lost, as well as optimising the architecture of a radio communications system by reducing the amount of redundant devices required.

With the present invention the above mentioned issues are resolved. The proposed technique provides a simple and efficient way for, in the event of a failure, restoring connectivity within a very short time without having to reduce the efficiency of the radio communications system with excess signalling and the maintenance of a large and complicated system architecture.

The technique is achieved by the teachings contained in the independent claims. Preferred embodiments of the invention are described in the dependent claims.

Said independent method restores connectivity in the event of a failure of a first controlling node of a plurality of controlling nodes, said first controlling node controlling a first group of nodes, in a radio communications system, comprises the steps of:
- maintaining a database in at least one further controlling node of said plurality, said further controlling node controlling a further group of nodes, wherein said database comprises of information relating to connectivity relationships between said first controlling node and said first group;
- establishing a control link between said first and said at least one further controlling nodes;
- detecting by said at least one further controlling node of said failure of said first controlling node on said control link, and
- connecting by said at least one further controlling node using said information to said first group, upon detection of said failure.

Said independent controlling node arranged for restoring connectivity in the event of a failure of a first controlling node of a plurality of controlling nodes, said first controlling node controlling a first group of nodes, in a radio communications system, said controlling node being further arranged to control a further group of nodes, comprises of:
- database means adapted to comprise of information relating to connectivity relationships between said first controlling node and said first group;
- control means adapted to establish a control link to said first controlling node;
- detecting means adapted to detect said failure of said first controlling node on said control link, and
- transceiver means adapted using said information upon detection of said failure, to connect to said first group.

The inventive technique is further advantageous as it ensures the redundancy of the controlling node by means of the network architecture implemented in the radio communications system rather than ensuring the redundancy using hardware means such as duplication of hardware within the controlling node.

Additional advantages can be seen in the dependent claims wherein:

The connection is set-up at least on a control plane using an internet protocol between said at least one further controlling node and said first group of nodes, ensuring that through the connection control can be established over the group of nodes as well as simplifying the connection set-up through the use of an existing protocol, thus avoiding the necessity of having to use a proprietary addressing scheme.

The at least one further controlling node uses at least one service parameter when connecting to said first group, said at least one service parameter differentiating said connection by specifying at least one of the following: an importance of each node of said first group, an importance of a user equipment active within said first group, an importance of a communication taking place within said first group, an importance of a service provided by each node of said first group. With this differentiation, an optimised load balancing can be achieved as the further controlling node has to maintain connectivity with its own nodes as well as with the nodes it is taking over. In this way, the further controlling node can differentiate between taking over all the nodes or a number of them. Thus increasing the amount of control the further controlling node has in making decisions when called upon to maintain connectivity. Furthermore, as the parameters indicate an importance of a node, user equipment, service or communication within the group of nodes being taken over, the further controlling node taking over the failed controlling node does not need to transmit any additional requests to a central network management node, thus reducing the amount of signalling as well as moving the decision making and management of the failure closer to the point where it occurred. Thus increasing the efficiency, optimisation and response time of the radio communications system. The parameter is at least a radio bearer service parameter or at least an allocation retention priority parameter.

The set-up connection is a one to one connection between said at least one further controlling node and each node of said first group of nodes, establishing a simple and effective way by which to control each node. Furthermore, as the at least one further controlling node establishes an independent connection directly with each node of the group whose controlling node has failed and at the same time still maintaining active connections with its own group of node, the need to have additional controlling nodes as backup controlling nodes optimises and simplifies the architecture of the radio communications system.

The set-up connection further comprises of an authentication and authorisation between said at least one further controlling node and said first group of nodes, ensuring that control and connectivity is fully established between the two sides.

The detection of the failure over the control link detects a failure of a logical connection comprising at least a radio network sublayer application part protocol and/or a physical connection between said first and said at least one further controlling nodes, thus enabling a distinction between types of failures and so being in a position to effect any further appropriate measures after the connectivity has been reestablished. Also as the detection is done over the control link, it can be done in a very short time as traffic over it is minimal, only control related.

The at least one further controlling node upon connecting to the first group of nodes retrieves dynamic data from the first group of nodes and/or from at least one user equipment of a plurality of user equipments present within said first group of nodes, the dynamic data relating to at least one of the following: configuration, connectivity, load situation data of each one of said first group of nodes and of the at least one user equipment. The retrieval of data enabling the further controlling node to quickly update the database it maintains with the latest data so that services and transmissions are not greatly disrupted.

The at least one further controlling node once connected to the first group of nodes updates a database of at least one supervising controlling node of a plurality of supervising controlling nodes, the at least one supervising controlling node controlling said first controlling node. Therefore, making the supervising controlling node aware of the change that has taken place within the radio communications system and thus increasing the effectiveness of the management of the radio communications system, as all information maintained in a supervising controlling node is up-to-date.

Once the failure is resolved, the first controlling node re-connects to the first group of nodes and the at least one further controlling node releases the connection to the first group of nodes, thus allowing the data load to be moved back to the original controlling node and removing it from the further controlling node.

### Short description of the drawings

The present invention will become more apparent from the description given herein below and from the accompanying drawings which are given by way of information only, and thus are not limitative of the present invention, and wherein:
- Fig. 1: depicts a radio communications system according to the prior art.
- Fig. 2: depicts a radio communications system implementing the inventive technique.
- Fig. 3: is a flow chart showing the steps of the inventive technique.
- Fig. 4: depicts in block diagram format the arrangement of means for executing the inventive technique.

### Detailed description of the invention

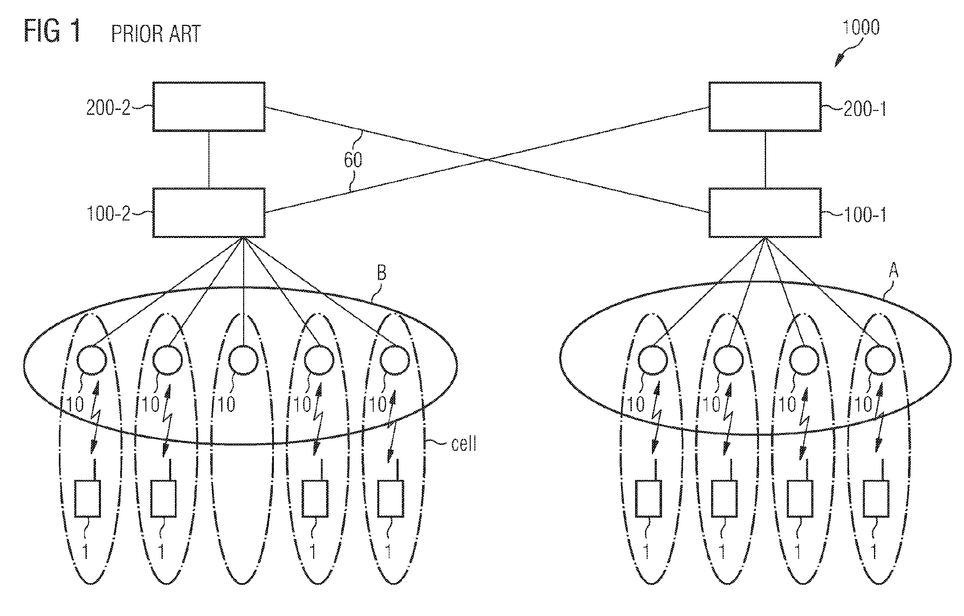

Fig. 1 shows a prior art radio communications system 1000. The radio communications system 1000 comprises of UEs 1, which in turn communicate with nodes 10 over an air-interface. Nodes 10 can comprise of BSs (Base Stations) and/or NodeBs. Each node 10 manages an area known as a cell, and provides access for UEs 1 to core networks such as the PSTN (Public Switched Telephone Network) and/or the internet. Each node 10 is coupled to and controlled by a controlling node 100-1, 100-2. Controlling node 100-1, 100-2 can comprise of RNCs (Radio Network Controllers) and/or CPSs (Control Plane Servers). Every controlling node 100-1, 100-2 is also coupled to and controlled by at least one supervising controlling node 200, for example a GGSN (Gateway GPRS (General Packet Radio Service) Service Node). Each controlling node 100-1, 100-2 controls a plurality of nodes 10 which together form a group. In fig. 1a, groups A and B are thus formed.

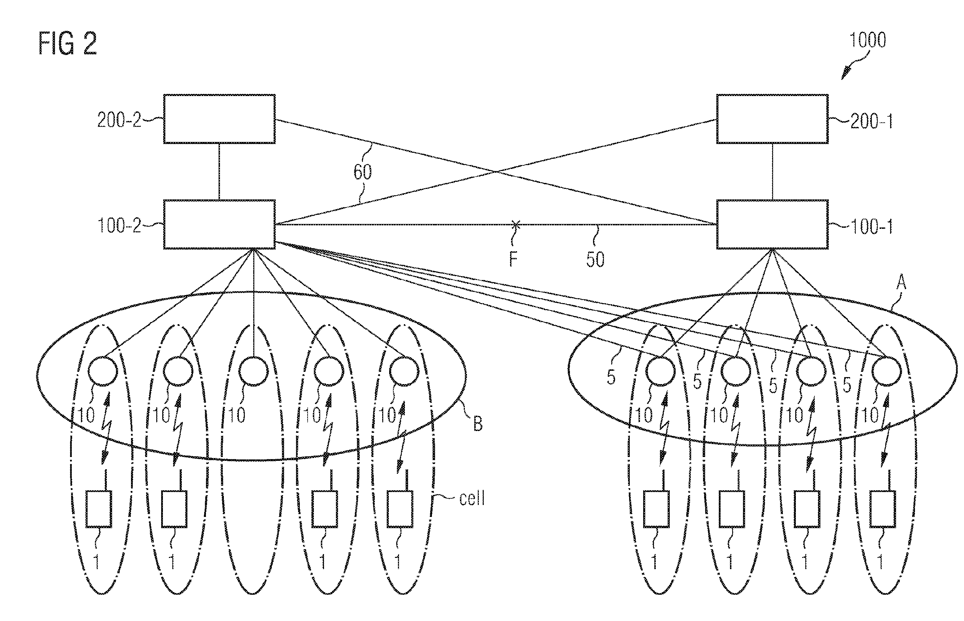

Fig. 2 shows a radio communications system 1000, wherein the inventive technique is applicable. It is identical with fig. 1 but differs only in that controlling nodes 100-1, 100-2 also establish a control link 50 between them for example over the Iur (or the eIur) interface, in order to be able to exchange control messages and to monitor and detect a failure of one controlling node 100-1, 100-2 by another one. A failure detected can be the failure of a logical and/or of a physical connection between controlling nodes 100-1, 100-2 detected over control link 50. For example, a logical failure being the failure to detect specific control messages within a specific time period from a controlling node 100-1, 100-2 and a physical failure being the complete cessation of reception of any messages from a controlling node 100-1, 100-2.

In the illustrative example in fig. 2, a failure F is detected over control link 50 of a first controlling node 100-1 controlling a first group of nodes A. The detection is effected by a further controlling node 100-2 controlling a further group of nodes B. The failure F detected can be the failure of a logical and/or of a physical connection between controlling nodes 100-1, 100-2 detected over control link 50. In particular, the logical connection over control link 50 comprises of at least a RNSAP (Radio Network Sublayer Application Part) protocol.

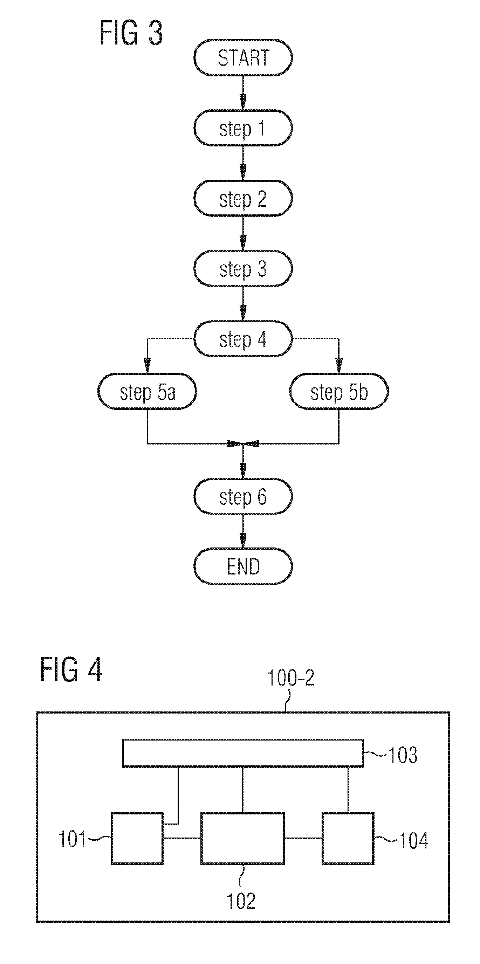

Fig. 3 depicts the steps performed by the inventive technique for preserving connectivity in the event of a failure.

In step 1, controlling nodes 100-1, 100-2 maintain a database that comprises of information relating respectively to connectivity relationships between themselves and the group they control, as well as connectivity relationships of the controlling node they are to take over in the event of a failure. The information comprised within the database can be inputted directly into each controlling node or can be requested by each controlling node from a supervising controlling node 200. Database updates can be transmitted between the controlling nodes 100-1, 100-2 whenever a connectivity relationship changes. In step 2, a control link 50 is established between the first controlling node 100-1 and a further controlling node 100-2 using an Iur or eIur interface. Control link 50 can also be used for transmitting the database updates when they are necessary. In step 3, the further controlling node 100-2 detects a failure F of the first controlling node 100-1, and in step 4 controlling node 100-2 upon detecting the failure F of controlling node 100-1 connects using the information maintained in the database to the group A of nodes 10 via connection 5 and restores connectivity to group A.

Step 4 further comprises of using at least one service parameter when connecting to nodes 10 of group A. The service parameter allows for a differentiation of the connection 5. This differentiation is specified by at least one of the following: an importance of each node 10 of said first group A, an importance of a user equipment 1 active within said first group A, an importance of a communication taking place within said first group A, an importance of a service provided by each node 10 of said first group A. The service parameters are stored in the databases of the controlling nodes 100-1, 100-2 comprising information relating to connectivity relationships between controlling nodes 100-1, 100-2 and their corresponding nodes 10 they control in their respective groups.

In this way the further controlling node 100-2 can differentiate between connecting to all nodes 10 of group A or to select a number of nodes 10 of group A and connect only to those selected. This differentiation is advantageous as it allows the further controlling node to perform load balancing when taking over group A, as it still has to maintain its own connection to its nodes 10 in group B.

The importance of each node 10 relates to the importance of the node within radio communications system 1000 or within the area covered by the different cells of group A. For example a node 10 lying in the centre of such an area and where a high amount of traffic is present will have a higher importance than a node 10 lying further away or in an area with a low amount of traffic.

The importance of a user equipment 1 active within the first group A, relates to the importance of the user equipment within the cell covered by its serving node and/or within the area covered by the different cells of group A. For example a user equipment 1 belonging to emergency services actively communicating will have a high importance and must not loose connectivity.

The importance of a communication taking place within said first group A, relates to the importance of a communication within the area covered by the nodes 10 of group A. For example a user equipment 1 actively communicating for example with an emergency call will have a high importance and must not loose connectivity, thus the node 10 that is serving the user equipment must have a connection 5 established.

The importance of a service provided by each node 10 of the first group A, relates to the importance of a service being provided by a node 10 to user equipments 1 present. For example a service such as a internet and/or television broadcast will have a higher importance and must not loose connectivity than a transmission of an email.

The at least one service parameter used can be at least a radio bearer service parameter. Also, a ARP (Allocation Retention Priority) parameter specifying the relative importance for allocation and retention of a radio bearer compared to other radio bearers can be used. Other parameters that can be used alone or in combination can be the following: traffic class, maximum bit rate, delivery order, maximum SDU (Service Data Unit) size, SDU format information, SDU error ratio, residual bit error ratio, delivery of erroneous SDUs, transfer delay, guaranteed bit rate, traffic handling priority.

The connection 5 set-up in step 4 is set-up at least on a control plane between the at least one further controlling node 100-2 and the first group of nodes A. This enables the at least one further controlling node 100-2 to transmit and receive control messages to the nodes 10 that it is connected to. At a later moment in time after setting-up the control plane connection, it is also possible for the at least one further controlling node 100-2 to set-up a connection on a signalling plane. When setting-up the connection, the at least one further controlling node 100-2 uses IP (internet protocol) to set-up the connection with the first group of nodes A. When using IP, controlling node 100-2 uses the IP addresses of nodes 10 to transmit messages in order to set-up the connection with the first group of nodes A. The connection that controlling node 100-2 sets-up with nodes 10 is a one-to-one connection, as depicted in fig 2, wherein controlling node 100-2 is connected directly to each node 10. Furthermore, when setting-up the connection, a further step of authentication and authorisation between controlling node 100-2 and the first group of nodes A is executed during step 4, in order to ensure that controlling node 100-2 gains control of the first group of nodes A in a smooth and efficient manner.

In a further refinement of the inventive technique, step 5a, once the connection in step 4 is set-up, controlling node 100-2 retrieves dynamic data from said first group of nodes A and/or from at least one user equipment 1 of a plurality of user equipments present within the first group of nodes A. The retrieved dynamic data relates to at least one of the following types of data: configuration data, connectivity data, load situation data, of each one of said first group of nodes and said at least one user equipment 1. In the case of the user equipment 1 load situation data can be the available capacity of a buffer of the user equipment 1. Controlling node 100-2 retrieves the data and updates the information contained in its database concerning nodes 10 of the first group A and of user equipments 1 present within the area covered by the first group A.

As well as retrieving the dynamic data from the first group A and user equipment 1, controlling node 100-2 also updates a database 201, step 5b, of at least one supervising controlling node 200-1 of a plurality of supervising controlling nodes 200-1, 200-2. The at least one supervising controlling node 200-1, being the controlling node for the first controlling node 100-1. In this way, the supervising controlling nodes 200-1, after having lost connection due to the failure F of controlling node 100-1, is made aware of the status of nodes 10 belonging to the group of node A as well as aware of the controlling node 100-2 that ensures the connectivity of the group A with the core network. The update from controlling node 100-2 to supervising controlling node 200-1 can be made over a control link 60. Control link 60, is either set-up when radio communications system 1000 is set in operation or is set-up once controlling node 100-2 takes over group A. IP or another protocol can be used to transmit and receive messages between the node 100-2 and 200-1.

In a further refinement of the inventive technique, step 6, once the failure F is resolved, either by a software action performed over the radio communications system 1000 or by hardware replacement and re-initialisation of controlling node 100-1, the first controlling node 100-1 re-connects to the first group of nodes A, and the at least one further controlling node 100-2 releases the connection it had established. It is also obvious to a person skilled in the art that upon re-connection, supervising controlling node 200-1 is made aware of the failure resolution and the re-connection of controlling node 100-1 to group A.

Fig. 4 depicts in block diagram format the arrangement of means for executing the inventive technique that are comprised within a controlling node 100-2.

Controlling node 100-2, for example a radio network controller (RNC) or a control plane server (CPS). An RNC acts as an interface between nodes 10 and the core network, while a CPS acts as an interface for executing the transmission control of a control signal for transmitting data from nodes 10.

Controlling node 100-2 comprises of database means 101 arranged to comprise of information relating to connectivity relationships between a first controlling node 100-1 and a first group of nodes A. Control means 102 arranged to establish, via transceiver means 103, a control link 50 to the first controlling node 100-1. Control means 102 are further arranged to control the functioning of the controlling node 100-2, while transceiver means 103 are arranged to transmit and receive messages over control and/or signalling connections. Control means 102 are coupled to detecting means 104 arranged to detect the failure F of the first controlling node 100-1 over control link 50. Detecting means 104 are further arranged to detect a failure F of a logical and/or a physical connection to the first controlling nodes A. In one refinement of the inventive technique, detecting means 104 are further arranged to use at least a radio network sublayer application part protocol to detect the failure F of the logical connection.

Transceiver means 103 are further arranged upon detection of the failure F, to connect to said first group of nodes A using the information stored in the database means 101. Transceiver means 103 are arranged to set-up the connection to the first group A at least over a control plane using an internet protocol and are further arranged to connect to each node of said first group of nodes using a one to one connection. Transceiver means 103 are also further arranged to set-up the connection to the first group A over a signalling plane if required.

Control means 102 are further arranged to use at least one service parameter when connecting to said first group (A), said at least one service parameter differentiating said connection by specifying at least one of the following: an importance of each node (10) of said first group (A), an importance of a user equipment (1) active within said first group (A), an importance of a communication taking place within said first group (A), an importance of a service provided by each node (10) of said first group (A).

Furthermore, control means 102 are further adapted upon connecting to said first group A of nodes via transceiver means 103, to retrieve via said transceiver means 103 dynamic data from the first group of nodes A. The dynamic data relating to at least one of the following: configuration, connectivity, load situation data of each one of said first group of nodes A.

In a further refinement, control means 102 are further adapted upon connecting to said first group of nodes A via transceiver means 103, to update via said transceiver means 103 a database 201 of at least one supervising controlling node 200-1 of a plurality of supervising controlling nodes 200-1, 200-2. The at least one supervising controlling node 200-1 adapted to control said first controlling node 100-1.

Additionally, once the failure F is resolved, either by a software action performed over the radio communications system 1000 or by hardware replacement and re-initialisation of controlling node 100-1, control means 102 are further arranged to release the connection established with the first group A. The handover of the control of group A is handled using standard handover procedures.

Additionally, the inventive technique still works even if the connection 50 to the first controlling node fails rather than the first controlling node failing itself. The controlling node still remains the central point for handling RRM requests received from UEs from the core network side. The inventive technique separates radio management functions which require detailed knowledge and information of the physical radio resources from service request functions which do not require such detailed knowledge and information, thus simplifying the management of the controlling node.

Furthermore, the inventive technique is flexible in that it enables sharing the additional work required when taking over the responsibilities, e.g. RRM, of a failed controlling node by an arbitrary number of replacement controlling nodes independently of the geographical location of the failed and the replacement node(s). Additionally, during normal operation, i.e. when no failure is detected, retrieval or exchange of dynamic data for maintaining the databases is not required, thus reducing the amount of traffic generated by controlling nodes communicating with each other.

Although the invention has been described in terms of a preferred embodiment described herein, those skilled in the art will appreciate other embodiments and modifications which can be made without departing from the scope of the teachings of the invention. All such modifications are intended to be included within the scope of the claims appended hereto.

## Claims

1. Method for restoring connectivity in the event of a failure (F) of a first controlling node (100-1) of a plurality of controlling nodes (100-1, 100-2), said first controlling node (100-1) controlling a first group (A) of nodes (10), in a radio communications system (1000), comprising the steps of:
- maintaining a database in at least one further controlling node (100-2) of said plurality, said further controlling node (100-2) controlling a further group (B) of nodes (10), wherein said database comprises of information relating to connectivity relationships between said first controlling node (100-1) and said first group (A);
- establishing a control link (50) between said first (100-1) and said at least one further (100-2) controlling nodes;
- detecting by said at least one further controlling node (100-2) of said failure (F) of said first controlling node (100-1) via said control link (50), and
- connecting by said at least one further controlling node (100-1) using said information to said first group (A), upon detection of said failure (F).

2. Method according to claim 1, wherein said connection (5) is set-up at least on a control plane between said at least one further controlling node (100-2) and said first group (A).

3. Method according to claim 2, wherein said connection (5) on said control plane is set-up using an internet protocol.

4. Method according to any one of claims 1 to 3, wherein said connection (5) between said at least one further controlling node (100-2) and a node (10) of said first group (A) is a one to one connection.

5. Method according to any one of claims 1 to 4, wherein said step of connecting further comprises of at least a further step of authentication and authorisation between said at least one further controlling node (100-2) and said nodes (10) of said first group (A).

6. Method according to any one of claims 1 to 5, wherein said step of detecting said failure over said control link (50) detects a failure of a logical and/or of a physical connection between said first (100-1) and said at least one further controlling node (100-2).

7. Method according to claim 6, wherein said logical connection comprises of at least a radio network sublayer application part protocol.

8. Method according to any one of claims 1 to 7, wherein said at least one further controlling node (100-2) upon connecting to said first group (A)
- retrieves dynamic data from said nodes (10) of said first group (A), said dynamic data relating to at least one of the following: configuration data, connectivity data, load situation data, of each node (10) of said first group (A); and/or
- retrieves dynamic data from at least one user equipment (1) of a plurality of user equipments active within said first group (A), said dynamic data relating to at least one of the following: configuration data, connectivity data, of said at least one user equipment (1).

9. Method according to any one of claims 1 to 7, wherein said at least one further controlling node (100-2) upon connecting to said first group (A) updates a database of at least one supervising controlling node (200-1) of a plurality of supervising controlling nodes (200-1, 200-2), said at least one supervising controlling node (200-1) controlling said first controlling node (100-1) as well as said at least one further controlling node (100-2).

10. Method according to any one of claims 1 to 9, wherein said at least one further controlling node (100-2) uses at least one service parameter when connecting to said first group (A) to differentiate said connection, said differentiation enabling said at least one further controlling node (100-2) to connect to all nodes (10) or to a number of nodes (10) of said first group (A).

11. Method according to claim 10, wherein said at least one service parameter specifying at least one of the following:
an importance of each node (10) of said first group (A), an importance of a user equipment (1) active within said first group (A), an importance of a communication taking place within said first group (A), an importance of a service provided by each node (10) of said first group (A).

12. Method according any one of claims 10 to 11, wherein said parameter is at least a radio bearer service parameter or an allocation retention priority parameter.

13. Method according to any one of claims 1 to 12, wherein upon said failure (F) being resolved said first controlling node (100-1) re-connects to said first group (A) and said at least one further controlling node (100-2) releases said connection (5) to said first group (A).

14. Controlling node (100-2) arranged for restoring connectivity in the event of a failure (F) of a first controlling node (100-1) of a plurality of controlling nodes, said first controlling node (100-1) controlling a first group (A) of nodes (10), in a radio communications system (1000), said controlling node (100-2) being further arranged to control a further group (B) of nodes (10), comprising of:
- database means (101) adapted to comprise of information relating to connectivity relationships between said first controlling node (100-1) and said first group (A);
- control means (102) adapted to establish a control link (50) to said first controlling node (100-1);
- detecting means (104) adapted to detect said failure (F) of said first controlling node (100-1) via said control link (50), and
- transceiver means (103) adapted using said information upon detection of said failure (F), to connect to said first group (A).

15. Controlling node according to claim 14, wherein upon said failure (F) being resolved said first controlling node (100-1) re-connects to said first group (A) and the controlling node (100-2) releases said connection (5) to said first group (A).

16. Controlling node according to claim 14 or 15, wherein said controlling node (100-2) is a radio network controller or a control plane server.

17. Radio communications system (1000) comprising of at least a first controlling node (100-1), said first controlling node (100-1) controlling a first group (A) of nodes (10) and a further controlling node (100-2), said further controlling node (100-2) controlling a further group (B) of nodes (10) according to claims 14 to 16.

## Patentansprüche

1. Verfahren zum Wiederherstellen einer Verbindungsfähigkeit im Fall eines Ausfalls (F) eines ersten Steuerknotens (100-1) mehrerer Steuerknoten (100-1, 100-2), wobei der erste Steuerknoten (100-1) eine erste Gruppe (A) von Knoten (10) in einem Funkkommunikationssystem (1000) steuert, das folgende Schritte umfasst:
- Verwalten einer Datenbank in mindestens einem weiteren Steuerknoten (100-2) der mehreren Steuerknoten, wobei der weitere Steuerknoten (100-2) eine weitere Gruppe (B) von Knoten (10) steuert, wobei die Datenbank Informationen bezüglich Verbindungsbeziehungen zwischen dem ersten Steuerknoten (100-1) und der ersten Gruppe (A) umfasst;
- Herstellen einer Steuerverbindung (50) zwischen dem ersten (100-1) und dem mindestens einen weiteren (100-2) Steuerknoten;
- Detektieren des Ausfalls (F) des ersten Steuerknotens (100-1) durch den mindestens einen weiteren Steuerknoten (100-2) über die Steuerverbindung (50); und
- Verbinden mit der ersten Gruppe (A) durch den mindestens einen weiteren Steuerknoten (100-1) unter Verwendung der Informationen nach der Detektion des Ausfalls (F).

2. Verfahren nach Anspruch 1, wobei die Verbindung (5) zumindest auf einer Steuerebene zwischen dem mindestens einen weiteren Steuerknoten (100-2) und der ersten Gruppe (A) eingerichtet wird.

3. Verfahren nach Anspruch 2, wobei die Verbindung (5) auf der Steuerebene unter Verwendung eines Internetprotokolls eingerichtet wird.

4. Verfahren nach einem der Ansprüche 1 bis 3, wobei die Verbindung (5) zwischen mindestens einem weiteren Steuerknoten (100-2) und einem Knoten (10) der ersten Gruppe (A) eine Einszu-eins-Verbindung ist.

5. Verfahren nach einem der Ansprüche 1 bis 4, wobei der Schritt des Verbindens ferner mindestens einen weiteren Schritt der Authentifizierung und der Autorisierung zwischen mindestens einen weiteren Steuerknoten (100-2) und dem Knoten (10) der ersten Gruppe (A) umfasst.

6. Verfahren nach einem der Ansprüche 1 bis 5, wobei der Schritt des Detektierens des Ausfalls über die Steuerverbindung (50) einen Ausfall einer logischen und/oder einer physikalischen Verbindung zwischen dem ersten (100-1) und mindestens einem weiteren Steuerknoten (100-2) detektiert.

7. Verfahren nach Anspruch 6, wobei die logische Verbindung mindestens ein Anwender-Protokoll einer Funknetz-Teilschicht umfasst.

8. Verfahren nach einem der Ansprüche 1 bis 7, wobei mindestens ein weiterer Steuerknoten (100-2) beim Verbinden mit der ersten Gruppe (A)
- dynamische Daten von den Knoten (10) der ersten Gruppe (A) empfängt, wobei sich die dynamischen Daten auf Konfigurationsdaten und/oder Verbindungsfähigkeitsdaten und/oder Lastsituationsdaten jeweils von jedem Knoten (10) der ersten Gruppe (A) beziehen; und/oder
- dynamische Daten von mindestens einer Anwendereinrichtung (1) mehrerer Anwendereinrichtungen innerhalb der ersten Gruppe (A) empfängt, wobei sich die dynamischen Daten auf Konfigurationsdaten und/oder Verbindungsfähigkeitsdaten mindestens einer Anwendereinrichtung (1) beziehen.

9. Verfahren nach einem der Ansprüche 1 bis 7, wobeimindestens ein weiterer Steuerknoten (100-2) beim Verbinden mit der ersten Gruppe (A) eine Datenbank von mindestens einem überwachenden Steuerknoten (200-1) mehrerer überwachender Steuerknoten (200-1, 200-2) aktualisiert, wobei mindestens ein überwachender Steuerknoten (200-1) den ersten Steuerknoten (100-1) sowie mindestens einen weiteren Steuerknoten (100-2) steuert.

10. Verfahren nach einem der Ansprüche 1 bis 9, wobeimindestens ein weiterer Steuerknoten (100-2) mindestens einen Dienstparameter verwendet, wenn er sich mit der ersten Gruppe (A) verbindet, um die Verbindung zu unterscheiden, wobei die Unterscheidung es mindestens einem weiteren Steuerknoten (100-2) ermöglicht, sich mit allen Knoten (10) oder einer Anzahl von Knoten (10) der ersten Gruppe (A) zu verbinden.

11. Verfahren nach Anspruch 10, wobei mindestens ein Dienstparameter die Wichtigkeit eines jeden Knotens (10) der ersten Gruppe (A) und/oder die Wichtigkeit einer Anwendereinrichtung (1), die innerhalb der ersten Gruppe (A) aktiv ist, und/oder die Wichtigkeit einer Kommunikation, die innerhalb der ersten Gruppe (A) stattfindet, und/oder die Wichtigkeit eines Dienstes, der jeweils durch einen Knoten (10) der ersten Gruppe (A) bereitgestellt wird, spezifiziert.

12. Verfahren nach einem der Ansprüche 10 bis 11, wobei der Parameter mindestens ein Service Parameter eines Funkträgers oder ein Zuteilungs- bzw. Zurückhaltungs-Prioritätsparameter ist.

13. Verfahren nach einem der Ansprüche 1 bis 12, wobei sich der erste Steuerknoten (100-1) bei Behebung des Ausfalls (F) wieder mit der ersten Gruppe (A) verbindet und mindestens ein weiterer Steuerknoten (100-2) die Verbindung (5) mit der ersten Gruppe (A) löst.

14. Steuerknoten (100-2), der dazu ausgelegt ist, eine Verbindungsfähigkeit im Fall eines Ausfalls (F) eines ersten Steuerknotens (100-1) mehrerer Steuerknoten wiederherzustellen, wobei der erste Steuerknoten (100-1) eine erste Gruppe (A) von Knoten (10) in einem Funkkommunikationssystem (1000) steuert, wobei der Steuerknoten (100-2) ferner dazu ausgelegt ist, eine weitere Gruppe (B) von Knoten (10) zu steuern, und der Folgendes umfasst:
- Datenbankmittel (101), die dazu ausgelegt sind, Informationen über Verbindungsbeziehungen zwischen dem ersten Steuerknoten (100-1) und der ersten Gruppe (A) zu umfassen;
- Steuermittel (102), die dazu ausgelegt sind, eine Steuerverbindung (50) mit dem ersten Steuerknoten (100-1) herzustellen;
- Detektionsmittel (104), die dazu ausgelegt sind, den Ausfall (F) des ersten Steuerknotens (100-1) über die Steuerverbindung (50) zu detektieren, und
- Sendeempfängermittel (103), die dazu ausgelegt sind, die Informationen bei der Detektion des Ausfalls (F) zu verwenden, um sich mit der ersten Gruppe (A) zu verbinden.

15. Steuerknoten nach Anspruch 14, wobei sich der erste Steuerknoten (100-1) bei Behebung des Ausfalls (F) wieder mit der ersten Gruppe (A) verbindet und der Steuerknoten (100-2) die Verbindung (5) mit der ersten Gruppe (A) löst.

16. Steuerknoten nach Anspruch 14 oder 15, wobei der Steuerknoten (100-2) ein Funknetzcontroller oder ein Steuerebenen-Server ist.

17. Funkkommunikationssystem (1000), das mindestens einen ersten Steuerknoten (100-1), wobei der erste Steuerknoten (100-1) eine erste Gruppe (A) von Knoten (10) steuert, und einen weiteren Steuerknoten (100-2) umfasst, wobei der weitere Steuerknoten (100-2) eine weitere Gruppe (B) von Knoten (10) nach den Ansprüchen 14 bis 16 steuert.

## Revendications

1. Un procédé de restauration d'une connectivité en cas de défaillance (F) d'un premier noeud de commande (100-1) d'une pluralité de noeuds de commande (100-1, 100-2), ledit premier noeud de commande (100-1) commandant un premier groupe (A) de noeuds (10) dans un système de radiocommunications (1000), comprenant les étapes suivantes :
- l'entretien d'une base de données dans au moins un autre noeud de commande (100-2) de ladite pluralité, ledit autre noeud de commande (100-2) commandant un autre groupe (B) de noeuds (10), ladite base de données contenant des informations relatives à des relations de connectivité entre ledit premier noeud de commande (100-1) et ledit premier groupe (A),
- l'établissement d'une liaison de commande (50) entre ledit premier (100-1) et ledit au moins un autre (100-2) noeud de commande,
- la détection par ledit au moins un autre noeud de commande (100-2) de ladite défaillance (F) dudit premier noeud de commande (100-1) par l'intermédiaire de ladite liaison de commande (50), et
- la connexion par ledit au moins un autre noeud de commande (100-1) au moyen desdites informations audit premier groupe (A) après détection de ladite défaillance (F).

2. Le procédé selon la revendication 1, dans lequel ladite connexion (5) est établie au moins sur un plan de commande entre ledit au moins un autre noeud de commande (100-2) et ledit premier groupe (A).

3. Le procédé selon la revendication 2, dans lequel ladite connexion (5) sur ledit plan de commande est établie au moyen d'un protocole Internet.

4. Le procédé selon l'une quelconque des revendications 1 à 3, dans lequel ladite connexion (5) entre ledit au moins un autre noeud de commande (100-2) et un noeud (10) dudit premier groupe (A) est une connexion un à un.

5. Le procédé selon l'une quelconque des revendications 1 à 4, dans lequel ladite étape de connexion comprend en outre au moins une autre étape d'authentification et d'autorisation entre ledit au moins un autre noeud de commande (100-2) et lesdits noeuds (10) dudit premier groupe (A).

6. Le procédé selon l'une quelconque des revendications 1 à 5, dans lequel ladite étape de détection de ladite défaillance par l'intermédiaire de ladite liaison de commande (50) détecte une défaillance d'une connexion logique et/ou physique entre ledit premier (100-1) et ledit au moins un autre noeud de commande (100-2).

7. Le procédé selon la revendication 6, dans lequel ladite connexion logique comprend au moins un protocole de partie application de sous-couche de réseau radio.

8. Le procédé selon l'une quelconque des revendications 1 à 7, dans lequel ledit au moins un autre noeud de commande (100-2) lors de la connexion audit premier groupe (A)
- récupère des données dynamiques provenant desdits noeuds (10) dudit premier groupe (A), lesdites données dynamiques concernant au moins un élément parmi les éléments suivantes : données de configuration, données de connectivité, données de situation de charge, de chaque noeud (10) dudit premier groupe (A), et/ou
- récupère des données dynamiques provenant d'au moins un équipement utilisateur (1) d'une pluralité d'équipements utilisateurs actifs à l'intérieur dudit premier groupe (A), lesdites données dynamiques concernant au moins un élément parmi les éléments suivants : données de configuration, données de connectivité dudit au moins un équipement utilisateur (1).

9. Le procédé selon l'une quelconque des revendications 1 à 7, dans lequel ledit au moins un autre noeud de commande (100-2) lors de la connexion audit premier groupe (A) actualise une base de données d'au moins un noeud de commande de supervision (200-1) d'une pluralité de noeuds de commande de supervision (200-1, 200-2), ledit au moins un noeud de commande de supervision (200-1) commandant ledit premier noeud de commande (100-1) ainsi que ledit au moins un autre noeud de commande (100-2).

10. Le procédé selon l'une quelconque des revendications 1 à 9, dans lequel ledit au moins un autre noeud de commande (100-2) utilise au moins un paramètre de service de la connexion audit premier groupe (A) de façon à différencier ladite connexion, ladite différentiation permettant audit au moins un autre noeud de commande (100-2) de se connecter à tous les noeuds (10) ou à un nombre de noeuds (10) dudit premier groupe (A).

11. Le procédé selon la revendication 10, dans lequel ledit au moins un paramètre de service spécifie au moins un des éléments suivants : une importance de chaque noeud (10) dudit premier groupe (A), une importance d'un équipement utilisateur (1) actif à l'intérieur dudit premier groupe (A), une importance d'une communication se déroulant à l'intérieur dudit premier groupe (A), une importance d'un service fourni par chaque noeud (10) dudit premier groupe (A).

12. Le procédé selon l'une quelconque des revendications 10 à 11, dans lequel ledit paramètre est au moins un paramètre de service de porteuse radio ou un paramètre de priorité de conservation d'attribution.

13. Le procédé selon l'une quelconque des revendications 1 à 12, dans lequel, lorsque ladite défaillance (F) est résolue, ledit premier noeud de commande (100-1) se reconnecte audit premier groupe (A) et ledit au moins un autre noeud de commande (100-2) libère ladite connexion (5) vers ledit premier groupe (A).

14. Un noeud de commande (100-2) agencé de façon à restaurer une connectivité en cas de défaillance (F) d'un premier noeud de commande (100-1) d'une pluralité de noeuds de commande, ledit premier noeud de commande (100-1) commandant un premier groupe (A) de noeuds (10) dans un système de radiocommunications (1000), ledit noeud de commande (100-2) étant agencé en outre de façon à commander un autre groupe (B) de noeuds (10), comprenant :
- un moyen de base de données (101) adapté de façon à contenir des informations relatives à des relations de connectivité entre ledit premier noeud de commande (100-1) et ledit premier groupe (A),
- un moyen de commande (102) adapté de façon à établir une liaison de commande (50) vers ledit premier noeud de commande (100-1),
- un moyen de détection (104) adapté de façon à détecter ladite défaillance (F) dudit premier noeud de commande (100-1) par l'intermédiaire de ladite liaison de commande (50), et
- un moyen d'émetteur-récepteur (103) adapté de façon à utiliser lesdites informations en cas de détection de ladite défaillance (F), de façon à se connecter audit premier groupe (A).

15. Le noeud de commande selon la revendication 14, dans lequel, lorsque ladite défaillance (F) est résolue, ledit premier noeud de commande (100-1) se reconnecte audit premier groupe (A) et le noeud de commande (100-2) libère ladite connexion (5) vers ledit premier groupe (A).

16. Le noeud de commande selon la revendication 14 ou 15, dans lequel ledit noeud de commande (100-2) est un dispositif de commande de réseau radio ou un serveur de plan de commande.

17. Un système de radiocommunications (1000) comprenant au moins un premier noeud de commande (100-1), ledit premier noeud de commande (100-1) commandant un premier groupe (A) de noeuds (10) et un autre noeud de commande (100-2), ledit autre noeud de commande (100-2) commandant un autre groupe (B) de noeuds (10) selon les revendications 14 à 16.
